(19) Europäisches Patentamt / European Patent Office / Office européen des brevets

(11) **EP 4 157 607 B1**

(12) **EUROPEAN PATENT SPECIFICATION**

(45) Date of publication and mention
of the grant of the patent:
**15.10.2025  Bulletin 2025/42**

(21) Application number: **22726807.5**

(22) Date of filing: **28.04.2022**

(51) International Patent Classification (IPC):
**B29C 48/92** *(2019.01)*     **B29C 48/08** *(2019.01)*
**B29C 48/31** *(2019.01)*

(52) Cooperative Patent Classification (CPC):
**B29C 48/08; B29C 48/313; B29C 48/92;**
B29C 2948/92152; B29C 2948/92447;
B29C 2948/92542; B29C 2948/92647;
B29C 2948/92904

(86) International application number:
**PCT/IB2022/053944**

(87) International publication number:
**WO 2022/229893 (03.11.2022 Gazette 2022/44)**

(54) **SYSTEM AND METHOD FOR MAPPING THE LIP ADJUSTMENT BOLTS OF A FLAT EXTRUSION DIE**

SYSTEM UND VERFAHREN ZUR ABBILDUNG DER LIPPENEINSTELLBOLZEN EINER FLACHEN EXTRUSIONSDÜSE

SYSTÈME ET PROCÉDÉ POUR LA CARTOGRAPHIE DES BOULONS D'AJUSTEMENT DE LÈVRE D'UNE FILIÈRE D'EXTRUSION PLATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2021  IN 202121019682**

(43) Date of publication of application:
**05.04.2023  Bulletin 2023/14**

(73) Proprietor: **LOHIA MECHATRONIK PRIVATE LIMITED**
**Maharashtra 411013 (IN)**

(72) Inventor: **LOHIA, Siddharth**
**Kanpur 208002 (IN)**

(74) Representative: **ip21 Ltd**
**Central Formalities Department**
**Suite 2**
**The Old Dairy**
**Elm Farm Business Park**
**Wymondham**
**Norwich, Norfolk NR18 0SW (GB)**

(56) References cited:
**EP-A2- 0 229 680          EP-A2- 0 357 071**
**DE-C1- 3 740 088          JP-A- 2020 152 097**
**US-A1- 2020 290 259**

## Description

### FIELD OF THE INVENTION

The present disclosure generally relates to a flat extrusion die application, more specifically the present disclosure relates to a system and method for mapping the lip adjustment bolts of a flat extrusion die for producing an extruded plastic film or sheet efficiently. The system and method map the thickness of the extruded plastic film/sheet.

### BACKGROUND OF THE INVENTION

Plastic films/ sheets are made of different material compositions such as PET, ABS, PVC, PP, LDPE, HDPE, blends of polyolefin, or blends of other plastic materials and are generally manufactured using an extrusion process. The extrusion process involves melting of plastic granules through single or multi screw extruders and then this melt feeds to a slot die/ flat extrusion die via a geared pump or through a continuous movement of a screw. The production of plastic films/ sheets takes place with the help of these flat extrusion dies, which are arranged at an extruder output. These wide flat extrusion dies usually consist of an output gap between an upper and a lower die part, e.g., die lip. The die lip is corresponding to the thickness of the plastic film/ sheet and allows the molten plastic to spread and shape into a plastic film/sheet/ sheet. The plastic film/sheet comes out from the die lip and is cooled by passing through an arrangement of chill roller or chilled water tank.

The upper and/ or lower die part has a corresponding cross-sectional taper, as a result of which the die lip can be elastically adjusted by applying a force against the other die lip, and thus the height of the outlet gap in certain limits can be set. The coarse adjustment of the die lip is usually carried out manually and a corresponding required output gap is created. With the help of adjustable die lip bolts, this output gap height is kept at a reasonably constant level. These adjustable die lip bolts can apply the force on the die lip using pneumatic through motor or by application of heat e.g., expansion or contraction of the die lip bolts. The output gap helps to shape the thickness of the plastic sheet.

For example, DE 4041069A discloses a slot die of an extruder for producing flat films, which has a thermal expansion bolt, with the aid of which deviations in the thickness of the flat films from a predetermined mean thickness can lie within the desired tolerance limits. For this purpose, this thermal expansion bolt is subjected to heat, thereby deforming the die lip following the desired bending line. To prevent the heat introduced into the thermal expansion bolt from being transferred to the upper die lip to which the thermal expansion pin is assigned and subsequently also to the lower part of the die, the thermal expansion bolt is in the area of the support on the flexible area of the die lip a heat poorly conductive head and/or with a layer of heat-insulating material.

A slot die is known from EP 0456176A, in which the heat is introduced into the adjusting bolt via a heating wire and can be removed again as required via a cooling channel through which a gaseous cooling medium flow. Instead, a heating rod can also be used for the heating wire.

An apparatus and method is known from US 20160200026A1, in which an apparatus is given to provide marks on the extruded films, these marks are further analysed by an existing thickness measurement system as a change in thickness.

A die bolts control system of a flat extrusion die is known from US 2020/290259A1.

An apparatus for use in carrying out decoupling control of a T-die including a lip portion pair with a gap extending between them, where lip portions are divided into a plurality of zones is known from EP 0 357 071 A2.

In particular, manual systems are available in the market in order to assist flat extrusion die functions. However, such systems are very primitive and do not offer any benefit for accomplishing the task at hand and that too with precision. At most, such systems offer better manual time management.

Due to the segmented, unskilled, and largely manual based flat extrusion process, there exists a need for better flat extrusion die process which would in turn address a variety of issues including, but not limited to, reducing the amount of time required by an extruder, form a standardized and uniform film/sheet, remove non-standard practices, can scale up, while addressing the variety of issues associated with current solutions, and its components.

### SUMMARY OF THE INVENTION

This summary is provided to introduce concepts related to systems and methods for mapping the lip adjustment bolts of a flat extrusion die and the concepts are further described below in the detailed description. This summary is neither intended to identify essential features of the claimed subject matter nor is it intended for use in determining or limiting the scope of the claimed subject matter.

It is the primary object of the subject matter to provide a system and method for mapping the lip adjustment bolts of a flat extrusion die that may be used by an extruder operator to form a uniform thickness extruded film/sheet.

It is an object of the present subject matter to provide a mathematical calculation technique controlled through a system that can map the lip adjustment bolt of a flat extrusion die at the lateral position of the corresponding film/sheet with the required thickness.

It is another object of the subject matter to provide a system and method for controlling die bolts of a flat extrusion die that uses a die assembly for extruding a required film/sheet with the defined dimensions of the film/sheet.

It is another object of the subject matter to provide a system and method for controlling die bolts of a flat extrusion die that identifies and avoids bulges in the formed film/sheet.

It is another object of the subject matter to provide a system and method for controlling die bolts of a flat extrusion die that forms a standardized and uniform film/sheet and may reduce the amount of work and time invested by extruders in forming the standardized and uniform film/sheet, providing them with more constructive time.

It is another object of the subject matter to provide a system and method for mapping the lip adjustment bolts of a flat extrusion die that may provide additional analytical insights like the overall film/sheet quality, material properties, faster processing, machine to material pairing, among others.

It is another object of the subject matter to provide a system and method for controlling die bolts of a flat extrusion die that may be customized as per producer requirements or user's desire, allowing a higher level of customization in the extrusion process, allowing different components to integrate and interact with each other and create combinations and permutations without the need of changing any other detail in either of the parts of the flat extrusion die system.

It is another object of the subject matter to provide a system and method for mapping the lip adjustment bolts of a flat extrusion die that may provide data driven decision intelligence. The system may provide insights to a user/ controller/ reviewer on what and which parts of a flat extrusion die work perfectly, may require maintenance, provide feedback and may identify issues, assist to make corrections, and provide reports for management. Further, it has a self-learning capacity to augment the reviewer's expertise and bring consistency in the whole of the system.

It is another object of the subject matter to provide a system and method for mapping the lip adjustment bolts of a flat extrusion die that brings accuracy, saves time, and removes variations.

It is another object of the subject matter to provide a system and method for mapping the lip adjustment bolts of a flat extrusion die that may generate deep learning based reports & have data traceability, further it may scale up using artificial intelligence tools and cloud solutions.

It is another object of the subject matter to provide a system and method for mapping the lip adjustment bolts of a flat extrusion die that forms a uniform thickness film/sheet by reducing effort, time spent, brings consistency, efficiency, increasing the overall execution, enhancing the extrusion process performance and productivity.

It is another object of the subject matter to provide a number of advantages depending on the particular aspect, embodiment, implementation, and/or configuration.

It is another object of the subject matter to provide a platform that can provide reliable execution, scalability, and value-added services while controlling operating effort and costs.

It is another object of the subject matter to efficiently manage numerous instances simultaneously, work in different regulatory requirements, enable resources to collaborate and work together closely, efficiently, and collectively with user friendly interfaces.

The above and other objects of the present invention is provided according the various embodiments detailed below, however the same are not limiting the scope of the invention.

In accordance with one embodiment of the present invention, there is provided, a method to control die bolts of a flat extrusion die is disclosed. The method comprising, calibrating, by a processor, a zero-line calibration thickness profile of a film/sheet, being extruded from the flat extrusion die and measuring, by the processor, a variation in thickness of the film/sheet on at least one lip adjustment bolt position of a plurality of lip adjustment bolts and recording, by the processor, a die bolt influence area on the film/sheet, the die bolt influence area corresponds to the measured variation in thickness of the film/sheet at the respective lip adjustment bolt positions. Further, calculating, by the processor, a voltage correction factor for the at least one lip adjustment bolt based on the die bolt influence area, using the measured variation in thickness of the film/sheet at the at least one lip adjustment bolt position of the plurality of lip adjustment bolts and a variation in thickness at a mean lip adjustment bolt position of the plurality of lip adjustment bolts and actuating, by the processor, the at least one lip adjustment bolts by applying the voltage correction factor and correcting the variation in thickness of the film/sheet at each lip adjustment bolt position to the zero-line calibration thickness.

In yet another embodiment, the method is executed with the change in temperature of the at least one lip adjustment bolt which is effected by heating or cooling based on the voltage correction factor.

In yet another embodiment, the method has the variation in thickness of the film/sheet being measured throughout the width of the film/sheet at each lip adjustment bolt positions.

In yet another embodiment, the method uses actuation of the at least one lip adjustment bolt having a heating element that applies voltage to the die bolt.

In yet another embodiment, the method has the die bolt influence area on the film/sheet that is effected by overlapping influence areas of the at least one lip adjustment bolt position and at least a second lip adjustment bolt position.

In yet another embodiment, the method has the die bolt influence area that corresponds to the measured variation in thickness on an area of the film/sheet due to an influence of the at least one lip adjustment bolt position on the corresponding area of the film/sheet.

In yet another embodiment, the method has a plurality of voltage correction factors that are calculated corresponding to each of the plurality of lip adjustment bolts, and each of the plurality of voltage correction factors is applied to actuate the corresponding lip adjustment bolt at the respective plurality of lip adjustment bolt positions to vary the thickness throughout the width of the film/sheet.

In another embodiment, the method further comprises determining, by the processor, the zero-line calibration thickness profile of the film/sheet, and actuating the at least one lip adjustment bolt at a respective lip adjustment bolt position by applying the voltage correction factor to each lip adjustment bolt for correcting the thickness profile of the film/sheet to the zero-line calibration thickness profile at every lip adjustment bolt positions.

In another embodiment, the method further comprises creating, by the processor, a correction profile for the film/sheet to record a plurality of voltage correction factors, and the correction profile is stored and requisitioned on measuring the variation in thickness of the film/sheet.

In one embodiment, a die bolts control system of a flat extrusion die is disclosed. The system comprising a processor, and a memory coupled to the processor, wherein the processor executes a plurality of modules stored in the memory, and wherein the plurality of modules comprising a calibration module to calibrate a zero-line calibration thickness profile of a film/sheet, a thickness measurement module to measure a variation in thickness of the film/sheet extruded from the flat extrusion die on at least one lip adjustment bolt position of a plurality of lip adjustment bolts positioned equidistantly on the die bolt and to record a die bolt influence area on the film/sheet, the die bolt influence area corresponds to the measured variation in thickness of the film/sheet at a respective lip adjustment bolt position. The plurality of modules further comprises a die bolt control module to calculate a voltage correction factor for the at least one lip adjustment bolt based on the die bolt influence area, the voltage correction factor is calculated using the measured variation in thickness of the film/sheet at the at least one lip adjustment bolt position of the plurality of lip adjustment bolts and a variation in thickness at a mean lip adjustment bolt position of the plurality of lip adjustment bolts and a die bolt actuation module to actuate the at least one lip adjustment bolt by applying the voltage correction factor to correct the variation in thickness of the film/sheet at each lip adjustment bolt position to the zero-line calibration thickness.

In yet another embodiment, the system has a change in temperature of the at least one lip adjustment bolt which is effected by heating or cooling based on the voltage correction factor.

In yet another embodiment, the system has the variation in thickness of the film/sheet that is measured throughout the width of the film/sheet at each lip adjustment bolt positions.

In yet another embodiment, the system has actuation of each of the at least one lip adjustment bolt having a heating element that applies voltage to the die bolt.

In yet another embodiment, the system has the die bolt influence area on the film/sheet that is effected by overlapping influence areas of the at least one lip adjustment bolt position and at least a second lip adjustment bolt position.

In yet another embodiment, the system has the die bolt influence area that corresponds to the measured variation in thickness on an area of the film/sheet due to an influence of the at least one lip adjustment bolt position on the corresponding area of the film/sheet.

In yet another embodiment, the system has a plurality of voltage correction factors that are calculated corresponding to each of the plurality of lip adjustment bolts, and each of the plurality of voltage correction factors is applied to actuate the corresponding lip adjustment bolts at the corresponding lip adjustment bolt positions to vary the thickness throughout the width of the film/sheet.

In another embodiment, the system has the die bolt actuation module that actuates the at least one lip adjustment bolt at a respective lip adjustment bolt position by applying the voltage correction factor to each lip adjustment bolt for correcting the thickness profile of the film/sheet to the zero-line calibration thickness profile at every lip adjustment bolt positions.

In another embodiment, the system further comprises a profile module to create a correction profile for the film/sheet to record a plurality of voltage correction factors, the correction profile is stored in the memory and requisitioned on measuring the variation in thickness of the film/sheet.

In another embodiment, the system further comprises a test module to induce a known variation to the thickness of the film/sheet by change in temperature of the at least one lip adjustment bolt position and measuring the variation in thickness throughout the width of the film/sheet by the thickness measurement module.

## BRIEF DESCRIPTION OF THE DRAWINGS

A clear understanding of the key features of the subject matter summarized above may be had by reference to the appended drawings, which illustrate the method and system of the subject matter, although it will be understood that such drawings depict preferred embodiments of the subject matter and, therefore, are not to be considered as limiting its scope with regard to other embodiments which the subject matter is capable of contemplating. Accordingly:

FIGURE 1 illustrates a schematic module diagram depicting an exemplary die bolt control system, in accordance with an embodiment of the present subject matter.

FIGURE 2 illustrates a system diagram describing the working of an exemplary die bolt control system, in accordance with an embodiment of the present subject matter.

FIGURE 3 illustrates a system diagram describing the working of an exemplary die bolt control system, in accordance with another embodiment of the present subject matter.

FIGURE 4 depicts an exemplary step of a die bolt control method, in accordance with an embodiment of the present subject matter.

FIGURE 5 illustrates an exemplary flowchart of a method of die bolt control, in accordance with an embodiment of the present subject matter.

**DETAILED DESCRIPTION OF THE INVENTION**

**Call Out List**

| | |
|---|---|
| 100 | Module diagram |
| 102 | computer system |
| 104 | user |
| 106 | flat extrusion assembly system |
| 106a | funnel/feeder line |
| 106b | transfer line |
| 106c | plastic melt |
| 120 | control system |
| 120a | communication channel - flat extrusion assembly system communicating with extruder components |
| 120b | communication channel - communication channel - flat extrusion assembly system communicating with flat extrusion die components |
| 122 | processor |
| 124 | interfaces |
| 126 | memory |
| 128 | Modules |
| 130 | thickness and measurement module |
| 132 | control module |
| 134 | actuation module |
| 136 | calibration module |
| 138 | test module |
| 140 | profile module |
| 142 | other modules |
| 150 | storage |
| 204 | flat extrusion die |
| 206a, 206b, 206c.....206n | plurality of lip adjustment bolts |
| 206ap, 206bp, 206cp.....206np | plurality of lip adjustment bolts positions |
| 208a, 208b, 208c.....208n | die bolt areas |
| 210 | width of film/sheet after exit from die extruder |
| 212 | reduced width of film/sheet after necking |
| 214 | sheet/ film |
| 216a, 216b, 216c, ......216n | die bolt influence areas |
| 218 | chill roll stack |
| 300 | system diagram describing the working of an exemplary die bolt control system |
| 302 | fluid/water bath |
| 400 | exemplary step explaining die bolt control system |
| B1 | Lip adjustment bolt |

| Wb1 | Width |
| Db | distance between each lip adjustment bolt |
| 500 | exemplary flowchart of a method 500 of die bolt control system |
| 502, 504, 506, 508, 510 | various method steps |

The following is a detailed description of embodiments of the present disclosure depicted in the accompanying drawings. The embodiments are in such detail as to clearly communicate the disclosure.. While aspects of described systems and methods for mapping the lip adjustment bolts of a flat extrusion die can be implemented in any number of different computing systems, environments, and/or configurations, the embodiments are described in the context of the following exemplary system(s).

The present disclosure in an exemplary embodiment provides a method where a zero-line calibration thickness profile of a film/sheet being extruded from the flat extrusion die is calibrated. A variation in thickness of the film/sheet on at least one lip adjustment bolt position of a plurality of lip adjustment bolts positioned equidistantly on the die bolt is measured. A die bolt influence area on the film/sheet is recorded and the die bolt influence area corresponds to the measured variation in thickness of the film/sheet at the respective lip adjustment bolt positions. The present subject matter also discloses that a voltage correction factor for the at least one lip adjustment bolt based on the die bolt influence area is calculated. The voltage correction factor is calculated using the measured variation in thickness of the film/ sheet at the at least one lip adjustment bolt position of the plurality of lip adjustment bolts and a variation in thickness at a mean lip adjustment bolt position of the plurality of lip adjustment bolts. The at least one lip adjustment bolts is actuated by applying the voltage correction factor and correcting the variation in thickness of the film/sheet at each lip adjustment bolt position to the zero-line calibration thickness.

The present disclosure also discloses that the die lip adjusting bolts are distributed throughout the die width at an equal distance from each other. So in a situation where the net width of the film/sheet after being extruded is equal to the width of the die, the influence of expansion or contraction of a specific lip adjustment bolt is easy to relate with the lateral position of the area influenced by the functioning of that bolt. However, in a case, as stated above where the film/sheet changes the width after being extruded from the die it is not known that the function of a specific bolt has its influence on corresponding film/sheet thickness at a particular area on expanding or contracting. In such a situation it is possible that some of the lip adjustment bolt's functions have an overlap influence on the formed film/ sheet thickness. The present solution is able to map the influence of lip adjustment bolts on the lateral position of the film/sheet thickness. By mapping the lip adjustment bolts, the thickness variation can be controlled in an efficient manner throughout the width of the film/sheet and the wastage created due to non-uniform thickness at the edges can be minimized thus one can get a quality film/sheet with lesser wastage.

The present disclosure aims to a novel and efficient technique for mapping the lip adjustment bolts of a flat extrusion die to a specific position on extruded film/sheet. When a known variation is induced to the film/sheet through the die lip adjustment bolts, a corresponding change in the film/sheet thickness is measured to map the influence of a specific lip adjustment bolt.

The known solutions generally aimed to control the thickness variation of the film/ sheet by various manual or other techniques but the influence of a particular bolt on the corresponding thickness and area of the film/ sheet is provided by the present solution.

A component-wise structure and a step-wise method is listed below.

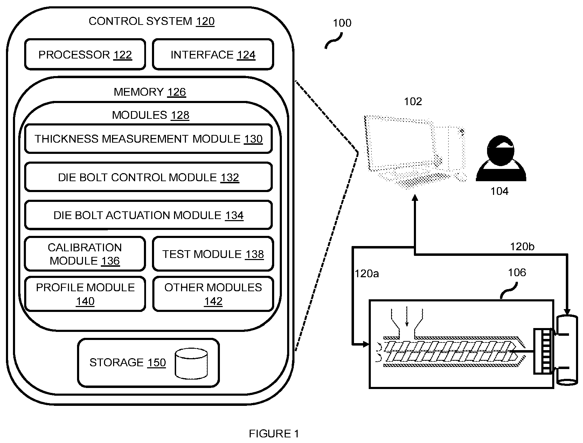

FIGURE.1 illustrates a schematic module diagram 100 depicting an exemplary die bolt control system, in accordance with an embodiment of the present subject matter.

In one embodiment, a control system 120 implements a method for die bolt control and mapping the lip adjustment bolts of a flat extrusion die on a computer system 102 operated by a user 104, the control system 120 includes a processor(s) 122, interface(s) 124, and a memory 126 coupled or in communication to the processor(s) 122. The processor(s) 122 may be implemented as one or more microprocessors, microcomputers, microcontrollers, digital signal processors, central processing units, state machines, logic circuitries, and/or any devices that manipulate signals based on automated grading application instructions. Among other capabilities, the processor(s) 122 is configured to fetch and execute computer-readable instructions stored in the memory 126.

Although the present disclosure is explained by considering a scenario in which the system is implemented as an application on a computer system, the systems and methods can be implemented in a variety of computing systems. The computing systems that can implement the described method(s) include, but are not limited to, mainframe computers, client-server architecture, workstations, personal computers, desktop computers, minicomputers, servers, multiprocessor systems, laptops, tablets, SCADA systems, smartphones, mobile computing devices, cloud network, web services, web solutions, and the like.

The interface(s) 124 may include a variety of software and hardware interfaces, for example, a web interface, a graphical user interface, etc., allowing the control system 120 to interact with a user. Further, the interface(s) 124 may enable the control system 120 to communicate with other computing devices, such as web servers and external data servers (not shown in the figure) as the need be.

A network used for communicating between all elements may be a wireless network, a wired network, or a combination thereof. The network can be implemented as one of the different types of networks, such as an intranet, local area network LAN, wide area network WAN, the internet, and the like. The network may either be a dedicated network or a shared network. The network further has access to storage devices residing at a client site computer, a host site server or computer, over the cloud, or a combination thereof and the like. The storage has one or many local and remote computer storage media, including one or many memory storage devices, databases, and the like.

The memory 126 can include any computer-readable medium known in the art including, for example, volatile memory (e.g., RAM), and/or non-volatile memory (e.g., EPROM, flash memory, etc.), over the cloud distributed storage, and the like. In one embodiment, the memory 126 includes module(s) 128 and a storage 150.

The modules 128 further includes a thickness measurement module 130, a die bolt control module 132, a die bolt actuation module 134, a calibration module 136, a test module 138, a profile module 140, and other modules 142. It will be appreciated that any of such modules may be represented as a single module or a combination of different modules. Furthermore, the memory 126 further includes the storage 150 that serves, amongst other things, as a repository for storing data fetched, processed, received, and generated by one or more of the modules 128. The storage 150 includes, for example, operational data, workflow data, and other data. The storage 150 includes multiple databases including but not limited to a thickness measurement data, a die bolt control data, a die bolt actuation data, a calibration data, a test data, a profile data, and other modules data.

The computer system 102 is further connected or connectable to a flat extrusion assembly system 106 that has a plurality of components and systems including but not limited to an extruder and a flat extrusion die.. The flat extrusion die consists of a die, lip adjustment bolts, push pull mechanism, surface for molten flow, and other parts. The flat extrusion assembly system 106 communicates (send instructions, actuate, fetches readings, such as temperature and functional readings, and other functions) with the extruder components via 120a. The flat extrusion assembly system 106 communicates (send instructions, actuate, fetches readings, such as width and functional readings, and other functions) with the flat extrusion die components via 120b.

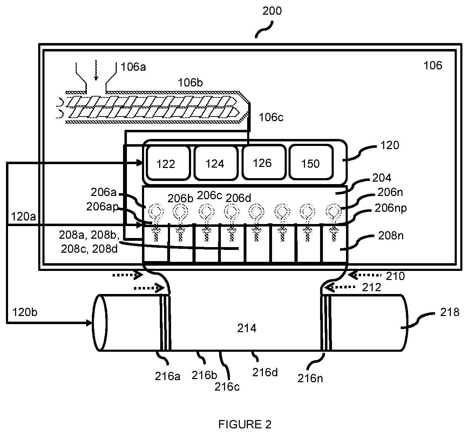

The working of the control system 120 and related method and associated modules, sub-modules, methods may be explained in detail also using FIGURE 2, FIGURE 3, FIGURE 4, and FIGURE 5 explained below.

In one embodiment, the control system 120 receives user instruction data through the interface 124 on the computer system 102. The modules 128 of the control system 120 process the instructions using the processor 122 while using the system data storage 150, the other modules 142, and supporting components.

The thickness measurement module 130 of the control system 120 measures a variation in thickness of the film/sheet 214 extruded from the flat extrusion die on at least one lip adjustment bolt position 206ap, ..., 206np of a plurality of lip adjustment bolts 206a, ..., 206n positioned equidistantly on the die bolt and to record a die bolt influence area on the film/sheet 214, the die bolt influence area corresponds to the measured variation in thickness of the film/sheet 214 at a respective lip adjustment bolt position 206ap, ..., 206np. The thickness measurement module 130 measures a change in temperature of the at least one lip adjustment bolt that is affected by heating or cooling based on the voltage correction factor. The variation in thickness of the film/sheet 214 is measured throughout the width of the film/sheet 214 at each lip adjustment bolt positions.

The die bolt control module 132 of the control system 120 calculates a voltage correction factor for the at least one lip adjustment bolt 206a, ..., 206n based on the die bolt influence area. The voltage correction factor is calculated using the measured variation in thickness of the film/sheet 214 at the at least one lip adjustment bolt position 206ap, ..., 206np of the plurality of lip adjustment bolts 206a, ..., 206n and a variation in thickness at a mean lip adjustment bolt position 206ap, ..., 206np of the plurality of lip adjustment bolts 206a, ..., 206n.

The die bolt control module 132 of the control system 120 calculates the die bolt influence area on the film/sheet 214 which is effected by overlapping influence areas of the at least first lip adjustment bolt position 206ap, ..., 206np and at least a second lip adjustment bolt position 206bp, ..., 206np.

The die bolt control module 132 of the control system 120 calculates the die bolt influence area corresponding to the measured variation in thickness on an area of the film/sheet 214 due to an influence of the at least one lip adjustment bolt 206a, ..., 206n on the corresponding area of the film/sheet 214.

The die bolt control module 132 of the control system 120 calculates a plurality of voltage correction factors corresponding to each of the plurality of lip adjustment bolts 206a, ..., 206n, and wherein each of the plurality of voltage correction factors is applied to actuate the corresponding lip adjustment bolts 206a, ..., 206n at the corresponding lip adjustment bolt positions 206ap, ..., 206np to vary the thickness throughout the width of the film/sheet 214.

The die bolt actuation module 134 of the control system 120 actuates the at least one lip adjustment bolt 206a, ..., 206n by applying the voltage correction factor to correct the variation in thickness of the film/sheet 214 at each lip adjustment bolt position 206ap, ..., 206np to the zero-line calibration thickness.

The die bolt actuation module 134 of the control system 120 actuates the at least one lip adjustment bolt 206a, ..., 206n at a respective lip adjustment bolt position 206ap, ..., 206np by applying the voltage correction factor to each lip adjustment bolt 206a, ..., 206n for correcting the thickness profile of the film/sheet 214 to the zero-line calibration thickness profile at every lip adjustment bolt positions 206ap, ..., 206np. The actuation of each of the at least one lip adjustment bolt 206a, ..., 206n is performed by a heating element that applies voltage to the die bolt.

The calibration module 136 of the control system 120 determines a zero-line calibration thickness profile of the film/sheet 214.

The test module 138 of the control system 120 induces a known variation to the thickness of the film/sheet 214 by change in temperature of the at least one lip adjustment bolt 206a, ..., 206n and measuring the variation in thickness throughout the width of the film/sheet 214 by the thickness measurement module 130.

The profile module 140 of the control system 120 creates a correction profile for the film/sheet 214 to record a plurality of voltage correction factors. The correction profile is stored in the memory 126 and requisitioned on measuring the variation in thickness of the film/sheet 214.

The other modules 142 of the control system 120 performs multiple tasks, such as an analytics module would generate analytics based on the collected data, a report module would generate data for a dashboard or reports for a specific usage by users, management, assessors, or reviewers.

In one embodiment, a thickness measurement module 130 of a control system 120 is used to measure a variation in thickness of the film/sheet 214 produced by a flat extrusion die using 120b and to record a die bolt influence area on the film/sheet 214, the die bolt influence area corresponds to the measured variation in thickness of the film/sheet 214. When a known variation is induced to the thickness of the film/ sheet 214 by heating or cooling the lip adjustment bolts subsequently the change in thickness is measured throughout the width of the film/sheet 214. The disclosure utilizes a mathematical function to analyse the change in variation and to calculate the influence of a specific lip adjustment bolt position on the corresponding thickness change of the film/ sheet 214. This technique provides a faster method to map the die lip adjustment bolt on a lateral position of the film/ sheet 214 by which control in thickness can be done in an efficient manner.

In one embodiment, a die bolt control module 132 of a control system 120 calculates a voltage correction factor of the at least one lip adjustment bolt position of a flat extrusion die based on the die bolt influence area on a film/sheet. The voltage correction factor is calculated using the measured variation in thickness at the at least one lip adjustment bolt position 206ap, ..... 206np of the plurality of lip adjustment bolts 206a, 206b, ......... 206n and a variation in thickness at a mean lip adjustment bolt position of the plurality of lip adjustment bolts 206a, 206b, ......... 206n.

In one embodiment, a die bolt actuation module 134 of a control system 120 actuates the at least one lip adjustment bolt of the plurality of lip adjustment bolts of a flat extrusion die by applying the voltage correction factor.

FIGURE.2 illustrates a system diagram 200 describing the working of an exemplary die bolt control system, in accordance with an embodiment of the present subject matter.

The present disclosure depicts the architecture and working of the control system 120 for mapping the lip adjustment bolts of a flat extrusion die to increase efficiency and precision and obtain a uniform thickness film/sheet 214.

In one embodiment, a control system 120, such as a die bolt control system 120 resides on a computer system 102. The control system 120 is linked to various supporting components, an extruder system, a flat extrusion line, and the like in the following architecture.

In a first step, the flat extrusion assembly system 106 has a funnel/ feeder 106a from where pellets are conveyed by forced air through such a transfer line 106b, and pellets travel at a very high velocity. As the pellet comes in contact with the smooth pipe wall, it slides and slows down due to friction. The friction, in turn, creates sufficient heat to raise the pellet's surface temperature to its melting point and the molten fluid finds its way into an extrusion process.

The extrusion process is a continuous operation of melting and conveying a polymer in a heated and flat sheet die from which it exits at the desired width and thickness. The molten film/sheet 214 is wound through the nips of a chill roll stack 218 for thickness sizing and cooling. The film/sheet 214 is then cooled further on a cooling conveyor. A flat extrusion die 204 consists of a body, mandrel or pin, heaters, and lands. The die lands decrease the speed of the melt flow and build-up back pressure in the die and adapter. If the land length is too short, the melt flow out of the die may be uneven because of non-uniform pressure around the circumference of the die. The die mandrel can be adjusted to change the die opening in order to control film/sheet uniformity using die bolts. A die bolt is a device for controlling the thickness profile of extruded film/sheets. The lip adjustment bolts 206a, 206b, 206c, 206d, ..., 206n help reduce thickness variation across the width of the film/sheet 214 and reduces waste, time, and effort. The control system 120 adjusts the die lip of the lip adjustment bolts 206a, 206b, 206c, 206d, ..., 206n to optimize film/sheet uniformity and maximize production cost and product quality. The lip adjustment bolts 206a, 206b, 206c, 206d, ..., 206n with a distance between each bolt (Db) which are placed at an equal distance. The lip adjustment bolts 206a, 206b, 206c, 206d, ..., 206n are correlated as heating or cooling the corresponding part of the molten film/sheet 214 at equidistant or required distant and is shown as 208a, 208b, 208c, 208d, ..., 208n. This is the die bolt direct area of change in temperature or pressure. But, for all practical purposes, the die bolt influence area is calculated separately. In an embodiment, the lip adjustment bolts 206a, 206b, 206c, 206d, ..., 206n are spaced at the die 204 at a fixed distance (Db). But practically the influence of a lip adjustment bolt from the lip adjustment bolts 206a, 206b, 206c, 206d, ..., 206n is created on the corresponding thickness of the film/ sheet 214 due to the necking, shrinkage, and/ or stretching of the film/ sheet and is represented by corresponding die bolt influence area 216a, 216b, 216c, 216d, ..., 216n on the film/sheet 214. It is important to note that the die bolt influence area 216a, 216b, 216c, 216d, ..., 216n of the corresponding lip adjustment bolts 206a, 206b, 206c, 206d, ..., 206n is different compared to planned distant die bolt area 208a, 208b, 208c, 208d, ..., 208n of the corresponding lip adjustment bolts 206a, 206b, 206c, 206d, ..., 206n.

The Figure.2 depicts a schematic of plastic melt 106c coming out of the roller 106b into the slot die 204 and falling as the film/sheet 214 on the chill roller 218. Necking in the plastic film/ sheet 214 is being shown as a reduction in film/sheet width from 210 to 212. A width of the slot die 204 is shown as W1 while W2 is the width of the film/ sheet 214 after necking.

The lip adjustment bolts 206a, 206b, 206c, 206d, ..., 206n (also represented as B1, B2, B3, ..., Bn) are connected to a programmable logic control (PLC) through a die bolt control electronic circuit in the die bolt control system 120. The PLC is further connected to a thickness measurement module 130. The thickness measurement module 130 system can be based on different technologies i.e., X-ray, beta source, laser, capacitive. When a known variation is induced to the thickness of the film/sheet 214 by heating or cooling the lip adjustment bolts 206a, 206b, 206c, 206d, ..., 206n and subsequently the change in thickness is measured throughout the width of the film /sheet 214. Also, a mathematical function is provided to analyse the change in variation and to calculate the influence of a specific lip adjustment bolt 206a, 206b, 206c, 206d, ..., 206n to the corresponding thickness change of the film /sheet 214. The solution provides a faster method to map the lip adjustment bolts 206a, 206b, 206c, 206d, ..., 206n on a lateral position of the film/sheet 214 by which control in thickness can be done in an efficient manner.

A feature is provided in the software to zero line the thickness profile of the film/sheet 214 being produced. After doing the zero-line calibration the thickness profile of the film /sheet 214 would be corrected to be the same at every position. Every lip adjustment bolt (B1, B2...Bn) of the die lip adjustment bolts 206a, 206b, 206c, 206d, ..., 206n has its own heating element, which heats or cools by means of applying a voltage to the heater. After doing the zero-line calibration of one of the lip adjustment bolts, for example, bolt B1 is cooled, the voltage of the heater of bolt B1 is reduced to a known value. After cooling the bolt (B1) the change in corresponding thickness of the film/sheet 214 is measured through the thickness measurement module 130 of the control system 120.

A width (Wb1) is the area where change or variation in thickness is measured. The variation in thickness is more at the corresponding position of the lip adjustment bolt (B1) while the change is observed on both sides of the bolt up to a certain distance, making up a die bolt influence area on the film/sheet 214. Thus, the total width in which the change is measured is Wb1. For the total width of the film/sheet 214 the thickness which is influenced by cooling the lip adjustment bolt (B1), is W3n. The lip adjustment bolts 206a, 206b, 206c, 206d, ..., 206n are placed at a fix or equidistance (Db) between each bolts.

The corresponding number of affected bolts by changing the voltage of one lip adjustment bolt (B1) is calculated by dividing the width (Wb1) with the actual distance between each bolt (Db).

1.

$$\text{No. of bolts (Nb) affected} = Wb1/ Db$$

If the number is a non-integer, this can be rounded up.

In actuality, the lip adjustment bolts 206a, 206b, 206c, 206d, ..., 206n are spaced at the die at a fixed distance, (Db). But practically the influence a bolt (B1) is creating on the corresponding thickness of the film/ sheet 214 due to the necking, shrinkage, and /or stretching of the film/sheet 214 can be calculated by dividing the width of the affected film/sheet (Wb1) with affected number of bolts (Nb).

Thus, a distance of each bolt corresponding to the net width of the film/sheet in which the change was measured is (Dbx) = Wb1 / Nb

From the above calculations, it is known that every bolt has its influence on the change of the thickness up to a certain distance in which other bolts are lying. So, we must actuate every bolt (B1, B2, ..., Bn) of the lip adjustment bolts 206a, 206b, 206c, 206d, ..., 206n by applying a voltage correction factor.

The voltage correction factor to be applied on each bolt is calculated using the following formula:

$$\text{Voltage correction factor (Vc)} =$$
$$\text{Change of thickness at mean bolt position (B1, B2.....Bn)/}$$
$$\text{Change of thickness at mean bolt position (B1, B2.....Bn) – Change of}$$
$$\text{thickness at each corresponding bolt position (Nb1, Nb2........)}$$

Correction voltage factor applied at each bolt (B1, B2.....Bn) due to change in thickness due to Bolt (B1),

$$\text{Voltage correction factor at B1} = [Vc1 * \text{delta thickness at Nb1}]$$

$$\text{Voltage correction factor at B2} = [Vc2 * \text{delta thickness at Nb2}]$$

$$\text{Voltage correction factor at B3} = [Vc3 * \text{delta thickness at Nb3}]$$

...................................
...................................

$$\text{Voltage correction factor at Bn} = [Vc4 * \text{delta thickness at Nb4}]$$

Where Delta thickness at Nb1 = Current thickness at Nb1 - Thickness at zero profile

The above correction profile would be stored in the control system 120 and each time on change in thickness the voltage correction factor would be applied to each bolt. This now helps to form a uniform thickness film/sheet 214.

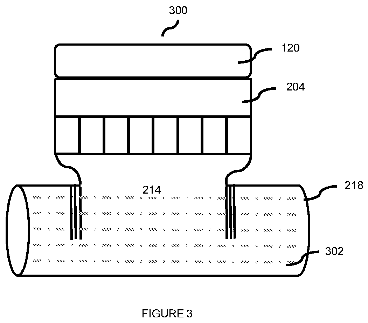

FIGURE.3 illustrates a system diagram 300 describing the working of an exemplary die bolt control system, in accordance with another embodiment of the present subject matter.

In one embodiment, a control system 120 adjusts the die lip of the lip adjustment bolts 206a, 206b, 206c, 206d, ..., 206n to optimize film/sheet uniformity and maximize production cost and product quality. A film/sheet 214 is wound through the nips of a chill roll stack 218 for thickness sizing and cooling. The film/sheet 214 is then cooled further on a cooling conveyor using a fluid 302. The Figure. 2 shows a schematic in which plastic melt is being cooled by passing through a chilled water bath 302. When a free-flowing plastic melt comes out from the die lip it must travel in the air before passing through the cooling step, in air due to its self-weight edges of the film/sheet contracts and subsequently net width of the film/sheet decreases, this is a natural phenomenon.

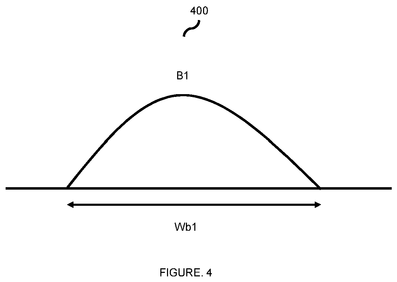

FIGURE.4 depicts an exemplary step 400 of a die bolt control method, in accordance with an embodiment of the present subject matter.

A width (Wb1) is the area where change or variation in thickness is measured. The variation in thickness is more at the corresponding position of the lip adjustment bolt (B1) while the change is observed on both sides of the bolt up to a certain distance, making up a die bolt influence area on the film/sheet 214. Thus, the total width in which the change is measured is Wb1. For the total width of the film/sheet 214 the thickness which is influenced by cooling the lip adjustment bolt (B1), is W3n. In an exemplary embodiment, the lip adjustment bolts 206a, 206b, 206c, 206d, ..., 206n are placed maintaining a fixed or equidistance (Db) between each bolts.

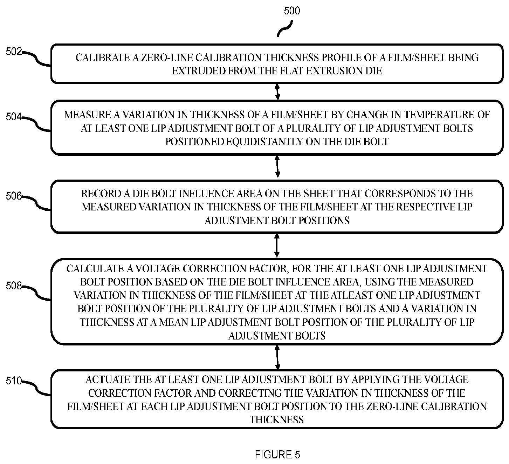

FIGURE.5 illustrates an exemplary flowchart of a method 500 of die bolt control, in accordance with an embodiment of the present subject matter.

In one embodiment, a method 500 for die bolt control is shown. The method may be described in the general context of computer-executable instructions. Generally, computer-executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communication network. In a distributed computing environment, computer-executable instructions may be located in any local or remote, or cloud-based computer storage media, including memory storage devices. The order in which the method is described and is not intended to be construed as a limitation and any number of the described method blocks can be combined in any order to implement the method or alternate methods.. Furthermore, the method may be implemented in any suitable hardware, software, firmware, or combination thereof. However, for ease of explanation, in the embodiments described below, the method may be implemented in the above-described system.

At step/ block 502, calibrate a zero-line calibration thickness profile of a film/sheet 214, being extruded from the flat extrusion die. **In** one implementation, the calibration of the zero-line calibration thickness profile is performed by the calibration module 136.

At step/ block 504, measure a variation in thickness of the film/sheet 214 on at least one lip adjustment bolt position of a plurality of lip adjustment bolts positioned equidistantly on the die bolt. In one implementation, the measurement of the variation in thickness is performed by the thickness measurement module 130.

At step/ block 506, record a die bolt influence area on the film/sheet 214 that corresponds to the measured variation in thickness of the film/sheet 214 at the respective lip adjustment bolt positions. In one implementation, the recording of the die bolt influence area on the film/sheet 214 is performed by the thickness measurement module 130.

At step/ block 508, calculate a voltage correction factor of the at least one lip adjustment bolt based on the die bolt influence area, using the measured variation in thickness of the film/sheet at the at least one lip adjustment bolt position of the plurality of lip adjustment bolts and a variation in thickness at a mean lip adjustment bolt position of the plurality of lip adjustment bolts. In one implementation, the calculation of the voltage correction factor is executed by the die bolt control module 132.

At step/ block 510, actuate the at least one lip adjustment bolts by applying the voltage correction factor and correcting the variation in thickness of the film/sheet 214 at each lip adjustment bolt position to the zero-line calibration thickness. In one implementation, the actuation the at least one lip adjustment bolt position is performed by a die bolt actuation module 134.

Thus, the method 500 helps in mapping the lip adjustment bolts of a flat extrusion die by the above process. The method 500 is further augmented by determining a zero-line calibration thickness profile of the film/sheet 214 and actuating the at least one lip adjustment bolt of the plurality of die bolts by applying the voltage correction factor that corrects the thickness profile of the film/sheet 214 using a calibration module 136.

The method 500 is further augmented by creating a correction profile for the film/sheet 214 to record a plurality of voltage correction factors by a profile module 140, the correction profile is stored and requisitioned on measuring the variation in thickness of the film/sheet 214.

The method 500 is further augmented by inducing a known variation to the thickness of the film/sheet 214 by a change in temperature of the at least one lip adjustment bolt position and measuring the variation in thickness throughout the width of the film/sheet 214 using a test module 138.

The present solution is used to automatically manage the die bolts of the flat extrusion die and form a uniform thickness film/sheet.

**Claims**

1. A die bolts control system of a flat extrusion die, the system comprising:

   a processor (122); and
   a memory (126) coupled to the processor (122), wherein the processor (122) executes a plurality of modules (128) stored in the memory (126), and wherein the plurality of modules (128) comprising:

   a calibration module (136) to calibrate a zero-line calibration thickness profile of a film /sheet (214);
   a thickness measurement module (130) to measure a variation in thickness of the film/sheet (214) extruded from the flat extrusion die on at least one lip adjustment bolt position (206ap, ..., 206np) of a plurality of lip adjustment bolts (206a, ..., 206n) and to record a die bolt influence area on the film/sheet (214), the die bolt influence area corresponds to the measured variation in thickness of the film/sheet (214) at a respective lip adjustment bolt position (206ap, ..., 206np);
   **characterised in that**,
   a die bolt control module (132) to calculate a voltage correction factor for the at least one lip adjustment bolt (206a, ..., 206n) based on the die bolt influence area, wherein the voltage correction factor is calculated using the measured variation in thickness of the film /sheet (214) at the at least one lip adjustment bolt position (206ap, ..., 206np) of the plurality of lip adjustment bolts (206a, ..., 206n) and a variation in thickness at a mean lip adjustment bolt position (206ap, ..., 206np) of the plurality of lip adjustment bolts (206a, ..., 206n); and
   a die bolt actuation module (134) to actuate the at least one lip adjustment bolt (206a, ..., 206n) by applying the voltage correction factor to correct the variation in thickness of the film /sheet (214) at each lip adjustment bolt position (206ap, ..., 206np) to the zero-line calibration thickness.

2. The system as claimed in claim 1, wherein a change in temperature of the at least one lip adjustment bolt (206a, ..., 206n) is effected by heating or cooling based on the voltage correction factor.

3. The system as claimed in claim 1, wherein the variation in thickness of the film /sheet (214) is measured throughout the width of the film/sheet (214) at each lip adjustment bolt positions (206ap, 206np).

4. The system as claimed in claim 2, wherein actuation of each of the at least one lip adjustment bolt (206a, 206n) has a heating element that applies voltage to the die bolt.

5. The system as claimed in claim 1, wherein the die bolt influence area on the film/sheet (214) is effected by overlapping influence areas of the at least one lip adjustment bolt position (206ap, 206np) and at least a second lip adjustment bolt position (206bp, 206np).

6. The system as claimed in claim 1, wherein the die bolt influence area corresponds to the measured variation in thickness on an area of the film/sheet (214) due to an influence of the at least one lip adjustment bolt (206a, ..., 206n) on the corresponding area of the film /sheet (214).

7. The system as claimed in claim 1, a plurality of voltage correction factors are calculated corresponding to each of the plurality of lip adjustment bolts (206a, ..., 206n), and wherein each of the plurality of voltage correction factors is applied to actuate the corresponding lip adjustment bolts (206a, ..., 206n) at the corresponding lip adjustment bolt positions (206ap, ..., 206np) to vary the thickness throughout the width of the film /sheet (214).

8. The system as claimed in claim 1, wherein the die bolt actuation module (134) is for actuating at least one lip adjustment bolt (206a, ..., 206n) at a respective lip adjustment bolt position (206ap, ..., 206np) by applying the voltage correction factor to each lip adjustment bolt (206a, ..., 206n) for correcting the thickness profile of the film /sheet (214) to the zero-line calibration thickness profile at every lip adjustment bolt positions (206ap, ..., 206np).

9. The system as claimed in claim 1, further comprising: a profile module (140) for creating a correction profile for the film/ sheet (214) to record a plurality of voltage correction factors, wherein in use the correction profile is stored in the memory (126) and requisitioned on measuring the variation in thickness of the film/sheet (214).

10. A method to control die bolts of a flat extrusion die, the method comprising:

   calibrating, by a processor (122), a zero-line calibration thickness profile of a film /sheet (214), being extruded from the flat extrusion die,
   measuring, by the processor (122), a variation in thickness of the film /sheet (214) on at least one lip adjustment bolt position (206ap, ..., 206np) of a plurality of lip adjustment bolts (206a, ..., 206n) positioned equidistantly on the die bolt;
   recording, by the processor (122), a die bolt influence area on the film /sheet (214), the die bolt influence area corresponding to the measured variation in thickness of the film /sheet (214) at the respective lip adjustment bolt positions (206ap, ..., 206np);
   **characterised in that**,
   calculating, by the processor (122), a voltage correction factor for the at least one lip adjustment bolt (206a, ..., 206n) based on the die bolt influence area, wherein the voltage correction factor is calculated using the measured variation in thickness of the film /sheet (214) at the at least one lip adjustment bolt position (206ap, ..., 206np) of the plurality of lip adjustment bolts (206a, ..., 206n) and a variation in thickness at a mean lip adjustment bolt position (206ap, ..., 206np) of the plurality of lip adjustment bolts (206a, ..., 206n);
   actuating, by the processor (122), the at least one lip adjustment bolts (206a, ..., 206n) by applying the voltage correction factor and correcting the variation in thickness of the film /sheet (214) at each lip adjustment bolt position (206ap, ..., 206np) to the zero line calibration thickness.

11. The method as claimed in claim 10, wherein the change in temperature of the at least one lip adjustment bolt (206a, ..., 206n) is effected by heating or cooling based on the voltage correction factor.

12. The method as claimed in claim 10, wherein the variation in thickness of the film/sheet (214) is measured throughout the width of the film/sheet (214) at each lip adjustment bolt positions (206ap, ..., 206np).

13. The method as claimed in claim 10, wherein actuation of the at least one lip adjustment bolt (206a, ..., 206n) has a heating element that applies voltage to the die bolt.

14. The method as claimed in claim 10, wherein the die bolt influence area on the film/sheet (214) is effected by overlapping influence areas of the at least one lip adjustment bolt position (206ap, ..., 206np) and at least a second lip adjustment bolt position (206ap, ..., 206np).

15. The method as claimed in claim 10, wherein the die bolt influence area corresponds to the measured variation in thickness on an area of the film/sheet (214) due to an influence of the at least one lip adjustment bolt (206a, ..., 206n) on the corresponding area of the film /sheet (214).

16. The method as claimed in claim 10, a plurality of voltage correction factors are calculated corresponding to each of the plurality of lip adjustment bolts (206a, ..., 206n), and wherein each of the plurality of voltage correction factors is applied to actuate the corresponding lip adjustment bolt (206a, ..., 206n) at the respective plurality of lip adjustment bolt positions (206ap, ..., 206np) to vary the thickness throughout the width of the film /sheet (214).

17. The method as claimed in claim 10, further comprising: determining, by the processor (122), the zero-line calibration thickness profile of the film/sheet (214), wherein actuating the at least one lip adjustment bolt (206a, ..., 206n) at a respective lip adjustment bolt position (206ap, ..., 206np) by applying the voltage correction factor to each lip adjustment bolt (206a, ..., 206n) for correcting the thickness profile of the film /sheet (214) to the zero-line calibration thickness profile at every lip adjustment bolt positions (206ap, ..., 206np).

18. The method as claimed in claim 10, further comprising: creating, by the processor (122), a correction profile for the film /sheet (214) to record a plurality of voltage correction factors, wherein the correction profile is stored and requisitioned on measuring the variation in thickness of the film/sheet (214).

**Patentansprüche**

1. System zur Steuerung von Düsenbolzen einer flachen Extrusionsdüse, wobei das System Folgendes umfasst:

   einen Prozessor (122); und
   einen Speicher (126), der mit dem Prozessor (122) gekoppelt ist, wobei der Prozessor (122) eine Vielzahl von Modulen (128) ausführt, die in dem Speicher (126) gespeichert sind, und wobei die Vielzahl von Modulen (128) umfasst:

   ein Kalibrierungsmodul (136) zum Kalibrieren eines Nulllinien-Kalibrierungsdickenprofils eines Films/Blatts (214);
   ein Dickenmessmodul (130) zum Messen einer Dickenschwankung des aus der flachen Extrusionsdüse extrudierten Films/Blatts (214) an mindestens einer Lippeneinstellbolzenposition (206ap, ..., 206np) einer Vielzahl von Lippeneinstellbolzen (206a, ..., 206n) und zum Aufzeichnen eines Düsenbolzen-Einflussbereichs auf dem Film/Blatt (214), wobei der Düsenbolzen-Einflussbereich der gemessenen Dickenschwankung des Films/Blatts (214) an einer jeweiligen Lippeneinstellbolzenposition (206ap, ..., 206np) entspricht; **dadurch gekennzeichnet, dass**,
   ein Düsenbolzensteuermodul (132) zum Berechnen eines Spannungskorrekturfaktors für den mindestens einen Lippeneinstellbolzen (206a, ..., 206n) auf der Grundlage des Düsenbolzen-Einflussbereichs, wobei der Spannungskorrekturfaktor unter Verwendung der gemessenen Dickenschwankung des Films/Blatts (214) an der mindestens einen Lippeneinstellbolzenposition (206ap, ..., 206np) der Vielzahl von Lippeneinstellbolzen (206a, ..., 206n) und einer Dickenschwankung an einer mittleren Lippeneinstellbolzenposition (206ap, ..., 206np) der Vielzahl von Lippeneinstellbolzen (206a, ..., 206n); und
   ein Düsenbolzenbetätigungsmodul (134) zum Betätigen des mindestens einen Lippeneinstellbolzens (206a, ..., 206n) durch Anwenden des Spannungskorrekturfaktors zum Korrigieren der Dickenschwankung des Films/Blatts (214) an jeder Lippeneinstellbolzenposition (206ap, ..., 206np) auf die Nulllinien-Kalibrierungsdicke.

2. System nach Anspruch 1, wobei eine Temperaturänderung des mindestens einen Lippeneinstellbolzens (206a, ..., 206n) durch Erwärmen oder Kühlen auf der Grundlage des Spannungskorrekturfaktors bewirkt wird.

3. System nach Anspruch 1, wobei die Dickenschwankung des Films/Blatts (214) über die gesamte Breite des Films/Blatts (214) an jeder Lippeneinstell-bolzenposition (206ap, 206np) gemessen wird.

4. System nach Anspruch 2, wobei die Betätigung jeder der mindestens einen Lippeneinstellbolzen (206a, 206n) ein Heizelement aufweist, das eine Spannung an den Düsenbolzen anlegt.

5. System nach Anspruch 1, wobei der Düsenbolzen-Einflussbereich auf den Film/das Blatt (214) durch überlappende Einflussbereiche der mindestens einen Lippeneinstellbolzenposition (206ap, 206np) und mindestens einer zweiten Lippeneinstellbolzenposition (206bp, 206np) bewirkt wird.

6. System nach Anspruch 1, wobei der Einflussbereich des Stempelbolzens der gemessenen Dickenschwankung in einem Bereich des Films/Blatts (214) aufgrund eines Einflusses des mindestens einen Lippeneinstellbolzens (206a, ..., 206n) auf den entsprechenden Bereich des Films/Blatts (214) entspricht.

7. System nach Anspruch 1, wobei eine Vielzahl von Spannungskorrekturfaktoren berechnet wird, die jedem der Vielzahl von Lippeneinstellbolzen (206a, ..., 206n) entsprechen, und wobei jeder der Vielzahl von Spannungskorrekturfaktoren angewendet wird, um die entsprechenden Lippeneinstellbolzen (206a, ..., 206n) an den entsprechenden Lippeneinstellbolzenpositionen (206ap, ..., 206np) zu betätigen, um die Dicke über die gesamte Breite des Films/Blatts (214) zu variieren.

8. System nach Anspruch 1, wobei das Düsenbolzenbetätigungsmodul (134) zum Betätigen mindestens eines Lippeneinstellbolzens (206a, ..., 206n) an einer jeweiligen Lippeneinstellbolzenposition (206ap, ..., 206np) dient, indem der Spannungskorrekturfaktor auf jeden Lippeneinstellbolzen (206a, ..., 206n) angewendet wird, um das Dickenprofil des Films/Blatts (214) an jeder Lippeneinstellbolzenposition (206ap, ..., 206np) auf das Nulllinien-Kalibrierungsdickenprofil zu korrigieren.

9. System nach Anspruch 1, ferner umfassend: ein Profilmodul (140) zum Erzeugen eines Korrekturprofils für den Film/das Blatt (214), um eine Vielzahl von Spannungskorrekturfaktor aufzuzeichnen, wobei das Korrekturprofil im Gebrauch im Speicher (126) gespeichert und bei der Messung der Dickenschwankung des Films/der Film (214) angefordert wird.

10. Verfahren zur Steuerung von Düsenbolzenn einer flachen Extrusionsdüse, wobei das Verfahren umfasst:

   Kalibrieren eines Nulllinien-Kalibrierungsdickenprofils einer Film/Blatt (214), die aus der flachen Extrusionsdüse extrudiert wird, durch einen Prozessor (122),
   Messen, durch den Prozessor (122), einer Dickenschwankung des Films/Blatts (214) an mindestens einer Lippeneinstellbolzenposition (206ap, ..., 206np) einer Vielzahl von Lippeneinstellbolzen (206a, ..., 206n), die äquidistant auf dem Düsenbolzen angeordnet sind;
   Aufzeichnen, durch den Prozessor (122), eines Düsenbolzen-Einflussbereichs auf dem Film/Blatt (214), wobei der Düsenbolzen-Einflussbereich der gemessenen Dickenschwankung des Films/Blatts (214) an den jeweiligen Lippeneinstellbolzenpositionen (206ap, ..., 206np) entspricht;
   **dadurch gekennzeichnet, dass**,
   durch den Prozessor (122) ein Spannungskorrekturfaktor für den mindestens einen Lippeneinstellbolzen (206a, ..., 206n) auf der Grundlage der Düsenbolzen-Einflussbereichs berechnet wird, wobei der Spannungskorrekturfaktor unter Verwendung der gemessenen Dickenschwankung des Films/Blatts (214) an der mindestens einen Lippeneinstellbolzenposition (206ap, ..., 206np) der Vielzahl von Lippeneinstellbolzen (206a, 206n) und einer Dickenschwankung an einer mittleren Lippeneinstellbolzenposition (206ap, ..., 206np) der Vielzahl von Lippeneinstellbolzen (206a, ..., 206n) berechnet wird;
   Betätigung des mindestens einen Lippeneinstellbolzens (206a, ..., 206n) durch den Prozessor (122) durch Anwenden des Spannungskorrekturfaktors und Korrektur der Dickenschwankung des Films/Blatts (214) an jeder Lippeneinstell-bolzenposition (206ap, ..., 206np) auf die Nulllinien-Kalibrierungsdicke.

11. Verfahren nach Anspruch 10, wobei die Temperaturänderung des mindestens einen Lippeneinstellbolzens (206a, ..., 206n) durch Erwärmen oder Kühlen auf der Grundlage des Spannungskorrekturfaktors bewirkt wird.

12. Verfahren nach Anspruch 10, wobei die Schwankung der Dicke des Films/Blatts (214) über die gesamte Breite des Films/Blatts (214) an jeder Lippeneinstellbolzenposition (206ap, ..., 206np) gemessen wird.

13. Verfahren nach Anspruch 10, wobei die Betätigung des mindestens einen Lippeneinstellbolzens (206a, ..., 206n) ein Heizelement aufweist, das Spannung an den Düsenbolzen anlegt.

14. Verfahren nach Anspruch 10, wobei der Düsenbolzen-Einflussbereich auf den Film/das Blatt (214) durch überlappende Einflussbereiche der mindestens einen Lippeneinstellbolzenposition (206ap, ..., 206np) und mindestens einer zweiten Lippeneinstellbolzenposition (206ap, ..., 206np) erfolgt.

15. Verfahren nach Anspruch 10, wobei der Düsenbolzen-Einflussbereich der gemessenen Dickenschwankung in einem Bereich des Films/Blatts (214) aufgrund eines Einflusses des mindestens einen Lippeneinstellbolzens (206a, ..., 206n) auf den entsprechenden Bereich des Films/Blatts (214) entspricht.

16. Verfahren nach Anspruch 10, wobei eine Vielzahl von Spannungskorrekturfaktoren berechnet wird, die jedem der Vielzahl von Lippeneinstellbolzen (206a, ..., 206n) entsprechen, und wobei jeder der Vielzahl von Spannungskorrekturfaktoren angewendet wird, um den entsprechenden Lippeneinstellbolzen (206a, ..., 206n) an der jeweiligen Vielzahl von Lippeneinstellbolzenpositionen (206ap, ..., 206np) zu betätigen, um die Dicke über die Breite des Films/Blatts (214) zu variieren.

17. Verfahren nach Anspruch 10, ferner umfassend: Bestimmen des Nulllinien-Kalibrierungsdickenprofils des Films-/Blatts (214) durch den Prozessor (122), wobei das Betätigen des mindestens einen Lippeneinstellbolzens (206a, ..., 206n) an einer jeweiligen Lippeneinstellbolzenposition (206ap, ..., 206np) durch Anwenden des Spannungskorrekturfaktors auf jeden Lippeneinstellbolzen (206a, ..., 206n) zum Korrigieren des Dickenprofils des Films/Blatts (214) auf das Nulllinien-Kalibrierungsdickenprofil an jeder Lippeneinstellbolzenposition (206ap, ..., 206n) erfolgt.

18. Verfahren nach Anspruch 10, ferner umfassend: Erzeugen eines Korrekturprofils für den Film/das Blatt (214) durch den Prozessor (122), um eine Vielzahl von Spannungskorrekturfaktoren aufzuzeichnen, wobei das Korrekturprofil gespeichert ist und beim Messen der Dickenschwankung des Films/Blatts (214) angefordert wird.

**Revendications**

1. Système de contrôle des boulons de filière d'une filière d'extrusion plate, le système comprenant :

   un processeur (122) ; et
   une mémoire (126) couplée au processeur (122), dans laquelle le processeur (122) exécute une pluralité de modules (128) stockés dans la mémoire (126), et dans laquelle la pluralité de modules (128) comprend :

   un module d'étalonnage (136) pour étalonner un profil d'épaisseur d'étalonnage de ligne zéro d'un film/d'une feuille (214) ;
   un module de mesure d'épaisseur (130) pour mesurer une variation d'épaisseur du film/de la feuille (214) extrudé(e) à partir de la filière d'extrusion plate sur au moins une position des boulons d'ajustement de lèvre (206ap, ..., 206np) d'une pluralité de boulons d'ajustement de lèvre (206a, ..., 206n) et pour enregistrer une zone d'influence des boulons d'ajustement de lèvre sur le film/la feuille (214), la zone d'influence des boulons d'ajustement de lèvre correspondant à la variation d'épaisseur mesurée du film/de la feuille (214) à une position des boulons d'ajustement de lèvre respective (206ap, ..., 206np) ;
   **caractérisé par le fait que**
   un module de contrôle des boulons de filière (132) pour calculer un facteur de correction de tension pour l'au moins un boulon d'ajustement de lèvre (206a, ..., 206n) sur la base de la zone d'influence des boulons de filière, dans lequel le facteur de correction de tension est calculé en utilisant la variation mesurée de l'épaisseur du film/de la feuille (214) à l'au moins une position des boulons d'ajustement de lèvre (206ap, ..., 206np) de la pluralité de boulons d'ajustement de lèvre (206a, ..., 206n) et une variation d'épaisseur à une position moyenne des boulons d'ajustement de lèvre (206ap, ..., 206np) de la pluralité de boulons d'ajustement de lèvre (206a, ..., 206n) ; et
   un module d'actionnement de boulon de filière (134) pour actionner l'au moins un boulon d'ajustement de lèvre (206a, ..., 206n) en appliquant le facteur de correction de tension pour corriger la variation d'épaisseur du film/de la feuille (214) à chaque position des boulons d'ajustement de lèvre (206ap, ..., 206np) à l'épaisseur d'étalonnage de ligne zéro.

2. Système selon la revendication 1, dans lequel un changement de température de l'au moins un boulon d'ajustement de lèvre (206a, ..., 206n) est réalisé par chauffage ou refroidissement sur la base du facteur de correction de tension.

3. Système selon la revendication 1, dans lequel la variation de l'épaisseur du film/de la feuille (214) est mesurée sur toute la largeur du film/de la feuille (214) à chaque position des boulons d'ajustement de lèvre (206ap, 206np).

4. Système selon la revendication 2, dans lequel l'actionnement de chacun de l'au moins un boulon d'ajustement de lèvre (206a, 206n) comporte un élément chauffant qui applique une tension au boulon de filière.

5. Système selon la revendication 1, dans lequel la zone d'influence des boulons de filière sur le film/la feuille (214) est réalisée par le chevauchement des zones d'influence de l'au moins une position des boulons d'ajustement de lèvre (206ap, 206np) et au moins une deuxième position des boulons d'ajustement de lèvre (206bp, 206np).

6. Système selon la revendication 1, dans lequel la zone d'influence des boulons de filière correspond à la variation d'épaisseur mesurée sur une zone du film/de la feuille (214) due à une influence de l'au moins un boulon d'ajustement de lèvre (206a, ..., 206n) sur la zone correspondante du film/de la feuille (214).

7. Système selon la revendication 1, une pluralité de facteurs de correction de tension étant calculés en correspondance avec chacun de la pluralité de boulons d'ajustement de lèvre (206a, ..., 206n), et dans lequel chacun de la pluralité des facteurs de correction de tension est appliqué pour actionner les boulons d'ajustement de lèvre correspondants (206a, ..., 206n) aux positions correspondantes des boulons d'ajustement de lèvre (206ap, ..., 206np) afin de faire varier l'épaisseur sur toute la largeur du film/de la feuille (214).

8. Système selon la revendication 1, dans lequel le module d'actionnement des boulons de filière (134) est destiné à actionner au moins un boulon d'ajustement de lèvre (206a, ..., 206n) à une position respective des boulons d'ajustement de lèvre (206ap, ..., 206np) en appliquant le facteur de correction de tension à chaque boulon d'ajustement de lèvre (206a, ..., 206n) pour corriger le profil d'épaisseur du film/de la feuille (214) au profil d'épaisseur d'étalonnage de ligne zéro à chaque position des boulons d'ajustement de lèvre (206ap, ..., 206np).

9. Système selon la revendication 1, comprenant en outre : un module de profil (140) pour créer un profil de correction pour le film/la feuille (214) afin d'enregistrer une pluralité de facteurs de correction de tension, le profil de correction, en utilisation, étant stocké dans la mémoire (126) et réquisitionné lors de la mesure de la variation d'épaisseur du film/de la feuille (214).

10. Méthode pour contrôler les boulons de filière d'une filière d'extrusion plate, la méthode comprenant :

l'étalonnage, par un processeur (122), d'un profil d'épaisseur d'étalonnage de ligne zéro d'un film/feuille (214), en cours d'extrusion à partir de la filière d'extrusion plate,
la mesure, par le processeur (122), d'une variation de l'épaisseur du film/de la feuille (214) sur au moins une position des boulons d'ajustement de lèvre (206ap, ..., 206np) d'une pluralité de boulons d'ajustement de lèvre (206a, ..., 206n) positionnés de manière équidistante sur le boulon de filière ;
l'enregistrement, par le processeur (122), d'une zone d'influence des boulons de filière sur le film/la feuille (214), la zone d'influence des boulons de filière correspondant à la variation mesurée de l'épaisseur du film/de la feuille (214) aux positions respectives des boulons d'ajustement de lèvre (206ap, ..., 206np) ;
**caractérisé en ce que**,
le calcul, à l'aide du processeur (122), d'un facteur de correction de tension pour l'au moins un boulon d'ajustement de lèvre (206a, ..., 206n) sur la base de la zone d'influence des boulons de filière, le facteur de correction de tension étant calculé à l'aide de la variation mesurée de l'épaisseur du film/de la feuille (214) au niveau de la position de l'au moins un boulon d'ajustement de lèvre (206ap, ..., 206np) de la pluralité de boulons d'ajustement de lèvre (206a, 206n) et une variation d'épaisseur à une position moyenne des boulons d'ajustement de lèvre (206ap, ..., 206np) de la pluralité de boulons d'ajustement de lèvre (206a, ..., 206n) ;
l'actionnement, par le processeur (122), de l'au moins un boulon d'ajustement de lèvre (206a, ..., 206n) en appliquant le facteur de correction de tension et en corrigeant la variation d'épaisseur du film/de la feuille (214) à chaque position des boulons d'ajustement de lèvre (206ap, ..., 206np) à l'épaisseur d'étalonnage de ligne zéro.

11. Méthode selon la revendication 10, dans lequel le changement de température de l'au moins un boulon d'ajustement de lèvre (206a, ..., 206n) est réalisé par chauffage ou refroidissement sur la base du facteur de correction de tension.

12. Méthode selon la revendication 10, dans laquelle la variation de l'épaisseur du film/de la feuille (214) est mesurée sur toute la largeur du film/de la feuille (214) à chaque position des boulons d'ajustement de lèvre (206ap, ..., 206np).

13. Méthode selon la revendication 10, dans laquelle l'actionnement de l'au moins un boulon d'ajustement de lèvre (206a, ..., 206n) comporte un élément chauffant qui applique une tension au boulon de filière.

14. Méthode selon la revendication 10, dans laquelle la zone d'influence des boulons de filière sur le film/la feuille (214) est réalisée par le chevauchement des zones d'influence de l'au moins une position des boulons d'ajustement de lèvre (206ap, ..., 206np) et au moins une deuxième position des boulons d'ajustement de lèvre (206ap, ..., 206np).

15. Méthode selon la revendication 10, dans laquelle la zone d'influence des boulons de filière correspond à la variation d'épaisseur mesurée sur une zone du film/de la feuille (214) due à une influence de l'au moins un boulon d'ajustement de lèvre (206a, ..., 206n) sur la zone correspondante du film/de la feuille (214).

16. Méthode selon la revendication 10, une pluralité de facteurs de correction de tension étant calculés correspondant à chacun de la pluralité des boulons d'ajustement de lèvre (206a, ..., 206n), et dans laquelle chacun de la pluralité de facteurs de correction de tension est appliqué pour actionner le boulon d'ajustement de lèvre correspondant (206a, ..., 206n) à la pluralité respective de positions de boulons d'ajustement de lèvre (206ap, ..., 206np) pour faire varier l'épaisseur sur toute la largeur du film/de la feuille (214).

17. Méthode selon la revendication 10, comprenant en outre : la détermination, par le processeur (122), du profil d'épaisseur d'étalonnage de ligne zéro du film/de la feuille (214), dans laquelle l'actionnement de l'au moins un boulon d'ajustement de lèvre (206a, ..., 206n) à une position des boulons d'ajustement de lèvre respective (206ap, ..., 206np) en appliquant le facteur de correction de tension à chaque boulon d'ajustement de lèvre (206a, ..., 206n) pour corriger le profil d'épaisseur du film/de la feuille (214) au profil d'épaisseur d'étalonnage de ligne zéro à chaque position des boulons d'ajustement de lèvre (206ap, ..., 206np),

18. Méthode selon la revendication 10, comprenant en outre : la création, par le processeur (122), d'un profil de correction pour le film/la feuille (214) afin d'enregistrer une pluralité de facteurs de correction de tension, le profil de correction étant stocké et réquisitionné lors de la mesure de la variation d'épaisseur du film/de la feuille (214).

FIGURE 1

FIGURE 2

FIGURE 3

400

B1

Wb1

FIGURE. 4

500

502 — CALIBRATE A ZERO-LINE CALIBRATION THICKNESS PROFILE OF A FILM/SHEET BEING EXTRUDED FROM THE FLAT EXTRUSION DIE

504 — MEASURE A VARIATION IN THICKNESS OF A FILM/SHEET BY CHANGE IN TEMPERATURE OF AT LEAST ONE LIP ADJUSTMENT BOLT OF A PLURALITY OF LIP ADJUSTMENT BOLTS POSITIONED EQUIDISTANTLY ON THE DIE BOLT

506 — RECORD A DIE BOLT INFLUENCE AREA ON THE SHEET THAT CORRESPONDS TO THE MEASURED VARIATION IN THICKNESS OF THE FILM/SHEET AT THE RESPECTIVE LIP ADJUSTMENT BOLT POSITIONS

508 — CALCULATE A VOLTAGE CORRECTION FACTOR, FOR THE AT LEAST ONE LIP ADJUSTMENT BOLT POSITION BASED ON THE DIE BOLT INFLUENCE AREA, USING THE MEASURED VARIATION IN THICKNESS OF THE FILM/SHEET AT THE ATLEAST ONE LIP ADJUSTMENT BOLT POSITION OF THE PLURALITY OF LIP ADJUSTMENT BOLTS AND A VARIATION IN THICKNESS AT A MEAN LIP ADJUSTMENT BOLT POSITION OF THE PLURALITY OF LIP ADJUSTMENT BOLTS

510 — ACTUATE THE AT LEAST ONE LIP ADJUSTMENT BOLT BY APPLYING THE VOLTAGE CORRECTION FACTOR AND CORRECTING THE VARIATION IN THICKNESS OF THE FILM/SHEET AT EACH LIP ADJUSTMENT BOLT POSITION TO THE ZERO-LINE CALIBRATION THICKNESS

FIGURE 5

**EP 4 157 607 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4041069 A
- EP 0456176 A
- US 20160200026 A1
- US 2020290259 A1
- EP 0357071 A2